# EUROPEAN PATENT APPLICATION

(11) **EP 4 653 226 A1**
(43) Date of publication of application: **26.11.2025**
(21) Application number: 24177786.1
(22) Date of filing: 23.05.2024
(51) Int. Cl.: B60K 35/00, H04R 1/40

(54) **A VEHICLE INFOTAINMENT SYSTEM COMPRISING AN ACOUSTIC SYSTEM**

(71) Applicant: Harman Becker Automotive Systems GmbH, 76307 Karlsbad (DE)
(72) Inventor: DIEGO REGLA, Pablo, 1026 Budapest (HU); VARGA, Balazs, 8000 Szekesfehervar (HU)
(74) Representative: Kraus & Lederer PartGmbB

(57) **Abstract**

A vehicle infotainment system is provided. The vehicle infotainment system comprises an acoustic system. The acoustic system comprises at least one microphone configured to pick up sound from a vehicle cabin. The vehicle infotainment system comprises at least one support structure configured to place the at least one microphone of the acoustic system in a position to pick up the sound, wherein the at least one support structure is provided at the frame of a display located at a dashboard of the vehicle cabin, and/or the at least one support structure is provided in the dashboard of the vehicle cabin.

## Description

### Technical Field

The present application relates to a vehicle infotainment system comprising an acoustic system.

### Background

Modem vehicles often include an infotainment system. A vehicle infotainment system generally refers to a system that provides human occupants of a vehicle (users of the infotainment system) with various information and entertainment options. For example, a conventional infotainment system could provide navigation information to the driver of the vehicle while also playing music.

A conventional infotainment system may expose a speech interface that allows a human user (occupant) of a vehicle to issue voice commands to the infotainment system. For example, an infotainment system may initiate one or more vehicle operations in response to a voice command of the human occupant, including querying a database to obtain a library of vehicle functions from a database, where each vehicle function, when executed, causes a subsystem within a vehicle to perform a corresponding vehicle operation. The speech interface typically comprises a microphone coupled to a computing device of the infotainment system.

Depending on a vehicle's architecture and arrangements inside a vehicle's cabin, it can be problematic to find a suitable location to place a microphone or microphones for an infotainment system to ensure acceptable acoustic performance (i.e., signal to noise ratio). One problem or set of problems for locating a microphone of an infotainment system may be caused by heating, ventilation, and air conditioning, HVAC, systems potentially degrading acoustic performance of the microphone. Typically, a microphone(s) for an infotainment system are mounted on the headliner or trim pieces at an overhead console, OHC, of a vehicle where the HVAC systems can cause one of the most significant adverse impacts to the acoustic performance. In other cases, the distance between a speaker and a microphone of an infotainment system may be too large causing a lack of signal to noise ratio. Thus, microphones for an infotainment system are usually mounted finding a compromise between acoustic performance and appearance of the infotainment system.

Infotainment systems for vehicles having a microphone located at an overhead console, OHC, or a headliner of a cabin are often impacted by air movement inside the cabin when rolling down windows as well as when operating a HVAC system. This impact increases when the driving speed increases. For example, there can be a significant reduction in acoustic performance when driving at 130 km/hour as compared to the acoustic performance at 50 km/hour.

Alongside problems associated with acoustic performance, other problems relate to appearance of infotainment systems. For example, appearance of an infotainment system can be negatively impacted by the visibility of a microphone or its mounting means. Oftentimes, undesired visibility of a microphone of an infotainment system makes a greater adverse impact than its poor acoustic performance.

### Summary

In view of the above, there is a need to improve acoustic performance of a microphone for an infotainment system for a vehicle cabin. Particularly, there is a need to improve robustness of the microphone to opening windows, operation of HVAC system, driving speeds, among others.

Alongside the need of improving acoustic performance of the microphone, there is a need for improving appearance of the infotainment system. Particularly, there is a need for reducing the visibility and/or improving arrangements of the microphone or its mounting means (support structures) in the cabin.

These needs are met by the features defined in the independent claims. The dependent claims define additional embodiments.

A vehicle infotainment system is provided. The vehicle infotainment system comprises an acoustic system. The acoustic system comprises at least one microphone configured to pick up sound from a vehicle cabin. The vehicle infotainment system further comprises a display configured to display information for a human user of the vehicle infotainment system. The display comprises a frame by which the display is attached to a part of the vehicle cabin and at least one support structure configured to place the at least one microphone in a position to pick up the sound, wherein the at least one support structure is provided at the frame.

According to some further aspects, the vehicle infotainment system comprises an acoustic system. The acoustic system comprises at least one microphone configured to pick up sound from a vehicle cabin. The vehicle infotainment system further comprises at least one support structure configured to place the at least one microphone in a position to pick up the sound, wherein the at least one support structure is provided in a dashboard of the vehicle cabin.

The features set out above and those described below may be used not only in the corresponding combinations explicitly set out, but also in other combinations or in isolation, without departing from the scope of protection of the present disclosure.

### Brief description of the Drawings

The present disclosure will now be described more fully hereinafter with reference to the accompanying drawings, in which embodiments of the disclosure are shown. However, this disclosure should not be construed being limited to the embodiments set forth herein. Rather, these embodiments are provided so that this disclosure will be thorough and complete, and will fully convey the scope of the disclosure to those skilled in the art. Like numbers refer to like elements throughout.
FIG. 1 schematically shows an acoustic system 100 for a vehicle cabin according to one of a number of embodiments.
FIG. 1a schematically shows an acoustic system 100a for a vehicle cabin according to one of a number of embodiments.
FIG. 1b schematically shows an acoustic system 100b for a vehicle cabin according to one of a number of embodiments.
FIG. 1c schematically shows an acoustic system 100c for a vehicle cabin according to one of a number of embodiments.
FIG. 2a shows noise spectra 200a measured at conditions A.
FIG. 2b shows noise spectra 200b measured at conditions B.
FIG. 2c shows noise spectra 200c measured at different locations on a frame.
FIG. 2d shows a difference 200d between noise spectra measured at different locations at a dashboard.
FIG. 3 schematically shows a vehicle infotainment system 300 for a vehicle cabin according to one of a number of embodiments.
FIG. 4 schematically shows a projection 400 of a vehicle cabin on a vertical plane according to one of a number of embodiments.

### Detailed description

The properties, features and advantages described above and the way in which they are achieved will become clearer and more clearly understood in association with the following description of the exemplary embodiments which are explained in greater detail in connection with the drawings. For simplicity and illustrative purposes, the present disclosure is described by referring mainly to an exemplary embodiment thereof. In the following description, numerous specific details are set forth in order to provide a thorough understanding of the present disclosure. However, it will be readily apparent to one of ordinary skill in the art that the present disclosure may be practiced without limitation to these specific details. In this description, well-known methods and structures have not been described in detail so as not to unnecessarily obscure the present disclosure.

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical or electronic devices may be combined with each other and/or separated in any manner based on the particular type of electrical implementation that is desired. It is recognized that any circuit or other electrical or electronic device (e.g., an acoustic system, an infotainment system) disclosed herein may include any number of microcontrollers, a graphics processor unit (GPU), integrated circuits, memory devices and software which co-act with one another to perform operation(s) disclosed herein. In addition, any one or more of the electrical or electronic devices may be configured to execute a program code (for an infotainment system) that is embodied in a non-transitory computer readable medium programmed to perform any number of the functions as disclosed.

In the following, embodiments of the disclosure will be described in detail with reference to the accompanying drawings. It is to be understood that the following description of embodiments is not to be taken in a limiting sense. The scope of the disclosure is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

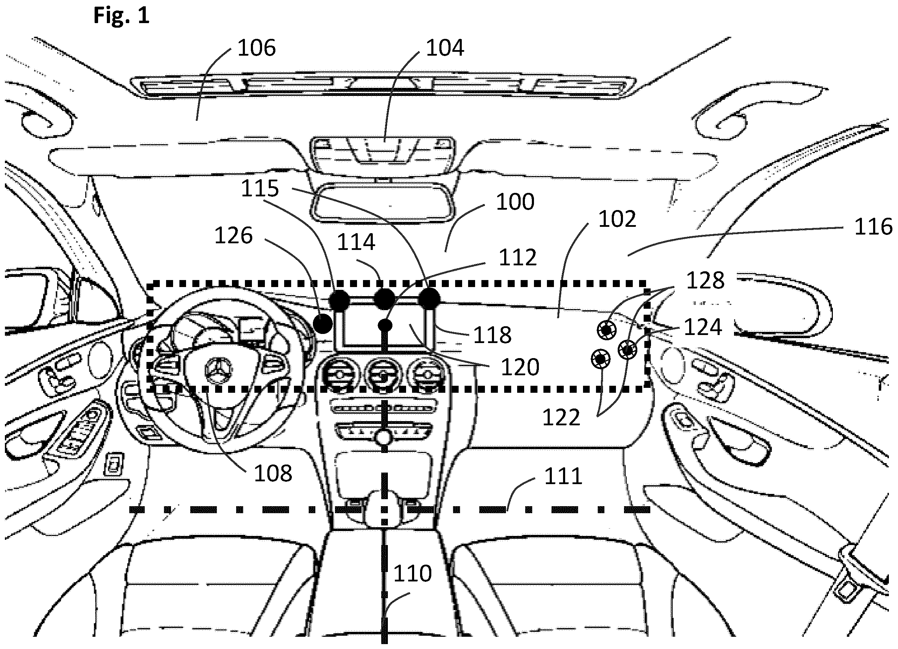

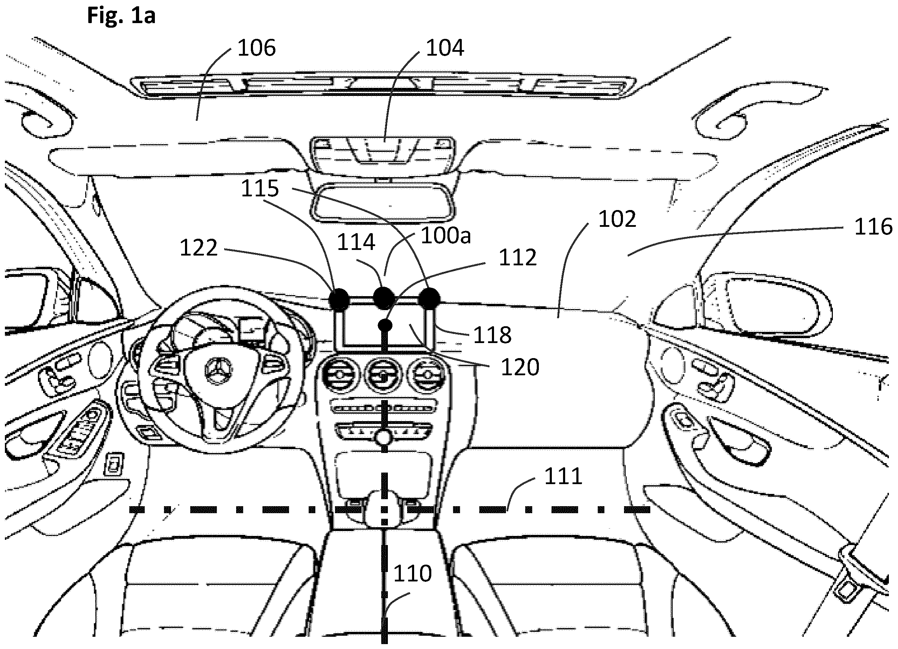

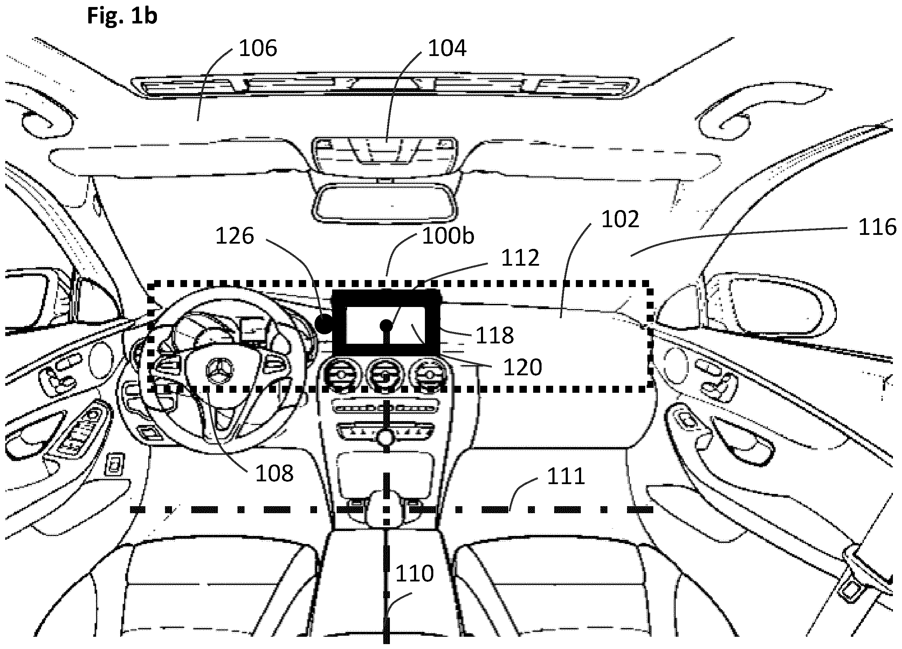

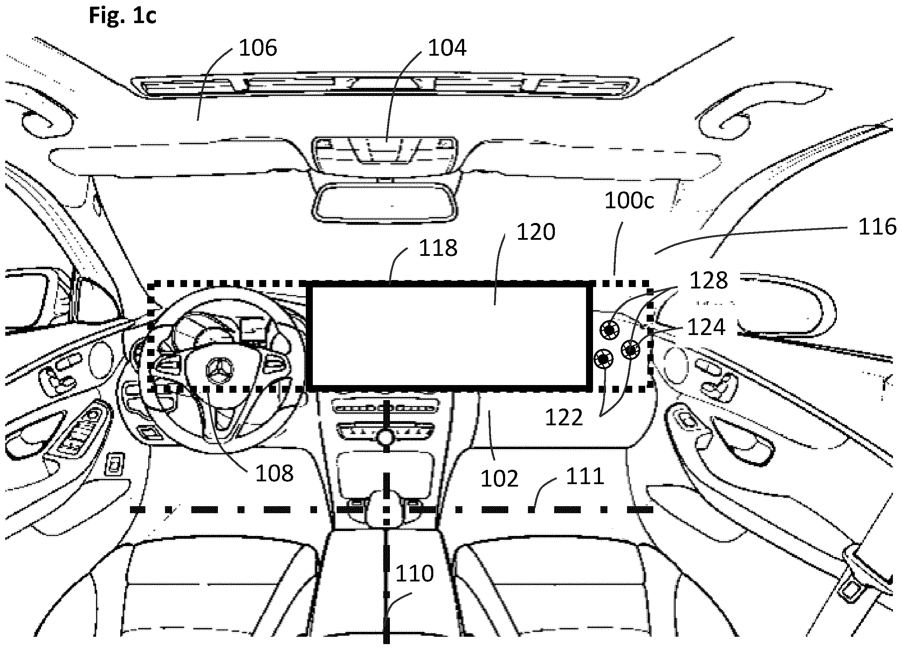

FIG. 1 schematically shows an acoustic system 100 for a vehicle cabin according to one of a number of embodiments.

The acoustic system 100 is provided for a vehicle infotainment system 300. The acoustic system 100 comprises at least one microphone 114, 115; 126, 128 configured to pick up sound from a vehicle cabin 116.

At least one support structure 122 is configured to place the at least one microphone 114, 115; 126, 128 in a position to pick up the sound.

The least one support structure 122 can be provided at the frame 118 (as further described in the context in fig. 1a) or in a dashboard 102 of the vehicle cabin 116 (as further described in the context of figs. 1b and 1c).

In some embodiments, the at least one support structure 122 may be at least one hole.

In some examples, the at least one microphone 114 may be located at a central location at a frame on a dashboard.

In some examples, the at least one microphone 115 may be located at a side location at a frame on a dashboard.

FIG. 1a schematically shows an acoustic system 100a for a vehicle cabin according to one of a number of embodiments.

The acoustic system 100a is provided for a vehicle infotainment system 300. The acoustic system 100a comprises at least one microphone 114, 115 configured to pick up sound from a vehicle cabin 116.

A display 120 for the vehicle infotainment system 300 is configured to display information for a human user of the vehicle infotainment system 300.

The display 120 comprises a frame 118 by which the display 120 is attached to a part of the vehicle cabin 116.

At least one support structure 122 is configured to place the at least one microphone 114, 115 in a position to pick up the sound.

The at least one support structure 122 is provided at the frame 118.

In some embodiments, the frame 118 may extend across a dashboard 102 of a vehicle in a traverse direction 111 for to each side from a centre of the dashboard in the traverse direction up to a full width of the dashboard 102 measured in the traverse direction 111. The traverse direction 111 may extend through the vehicle cabin 116 from one side door to another side door of the vehicle, perpendicular to a vehicle's centreline, wherein the vehicle's centreline may extend in a longitudinal direction 110 from a vehicle's front to a vehicle's rear dividing the vehicle into two equal halves.

In some embodiments, an end point of each of the at least one microphone 114, 115 facing an interior space of the cabin 116 may be arranged flush with an outer surface of the frame 118 facing the interior space of the cabin 116.

In some embodiments, the acoustic system 100a may comprise at least two microphones 114, 115 arranged at a distance of at least 1.5 cm between the at least two microphones 114, 115. The distance may be measured from the centre of each microphone and/or support structure (e.g., a hole).

In some embodiments, the acoustic system 100a may comprise three or more microphones 114, 115 mountable through three or more corresponding support structures 122. The three or more microphones 114, 115 and the three or more corresponding support structures 122 may be arranged in a symmetrical pattern, wherein a centre of symmetry may correspond to a location of a central microphone of the three or more microphones 114, 115.

The symmetrical pattern may improve aesthetic aspects (appearance) of the infotainment system.

In some embodiments, a mesh grille 124 may be arranged behind each of the at least one microphone 114, 115 to reduce visibility of each of the at least one support structure 122.

Reduced visibility of the at least one support structure 122 may improve aesthetic aspects (appearance) of the infotainment system.

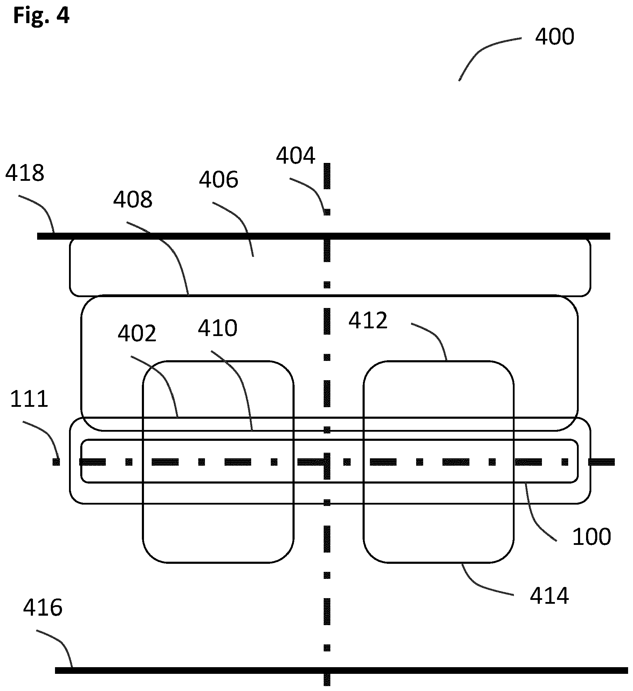

In some embodiments, the at least one support structure 122 may be located inside the vehicle cabin 116, as further illustrated by fig. 4, at a hight below an upper end 412 of a seat backrest of the vehicle viewed from floor 416 to ceiling 418 of the vehicle in a vertical direction 404 that may be perpendicular to the traverse direction 111 and to the longitudinal direction 110. Additionally or alternatively, the at least one support structure 122 may be located inside the vehicle cabin 116 at a hight below an upper end 408 of a front window of the vehicle from floor 416 to ceiling 418 of the vehicle in the vertical direction 404.

In some embodiments, the at least one support structure 122 may be at least one hole.

FIG. 1b schematically shows an acoustic system 100b for a vehicle cabin according to one of a number of embodiments.

The acoustic system 100b comprises at least one microphone 126 configured to pick up sound from a vehicle cabin 116.

At least one support structure 122 is configured to place the at least one microphone 126 in a position to pick up the sound.

The at least one support structure 122 is provided in a dashboard 102 of the vehicle cabin 116.

In some embodiments, the at least one microphone 126 may be mountable at the at least one support structure 122 withing a region 108 at the dashboard 102. The region 108 may extend across the dashboard 102 in a traverse direction 111 for to each side from a centre of the dashboard in the traverse direction up to a full width of the dashboard 102 measured in the traverse direction 111. The traverse direction 111 may extend through the vehicle cabin 116 from one side door to another side door of the vehicle, perpendicular to a vehicle's centreline, wherein the vehicle's centreline may extend in a longitudinal direction 110 from a vehicle's front to a vehicle's rear dividing the vehicle into two equal halves.

In some embodiments, an end point of each of the at least one microphone 126 facing an interior space of the cabin 116 may be arranged flush with an outer surface of the dashboard 102 facing the interior space of the cabin 116.

In some embodiments, the acoustic system 100b may comprise at least two microphones 126 and at least two support structures 122 arranged at a distance of at least 1.5 cm between the at least two microphones 126. The at least two support structures 122 may be provided in the dashboard 102. The distance may be measured from the centre of each microphone and/or support structure (e.g., a hole).

In some embodiments, the acoustic system 100b may comprise three or more microphones 126 mountable through three or more corresponding support structures 122. The three or more microphones 126 and the three or more corresponding support structures 122 may be arranged in a symmetrical pattern. The centre of symmetry may correspond to a location of a central microphone of the three or more microphones 126.

The symmetrical pattern may improve aesthetic aspects (appearance) of the infotainment system.

In some embodiments, a mesh grille 124 may be arranged behind each of the at least one microphone 126 to reduce visibility of each of the at least one support structures 122.

Reduced visibility of each of the at least one support structures 122 may improve aesthetic aspects (appearance) of the infotainment system.

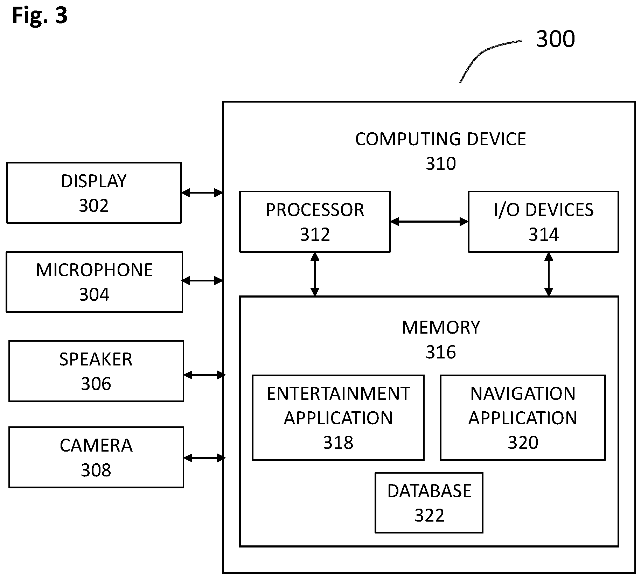

In some embodiments, the dashboard 102 may be a part of the vehicle infotainment system 300 (as further described in the context of fig. 3).

In some embodiments, the at least one support structure 122 may be located inside the vehicle cabin 116, as further illustrated by fig. 4, at a hight below an upper end 412 of a seat backrest of the vehicle viewed from floor 416 to ceiling 418 of the vehicle in a vertical direction 404 of the vehicle that is perpendicular to the traverse direction 111 and to the longitudinal direction 110. Additionally or alternatively, the at least one support structure 122 may be located inside the vehicle cabin 116 at a hight below an upper end 408 of a front window of the vehicle from floor 416 to ceiling 418 of the vehicle in the vertical direction 404.

In some embodiments, the at least one support structure 122 may be at least one hole.

In some examples, the at least one microphone 126 may be located on the side of the frame 118 at the steering wheel. In this example, the at least one microphone 126 may better pick up the sound from a driver's voice since the acoustic energy from the driver's voice is more likely to be directed in the direction of the display 120, and thus, the location of the at least onr microphone 126 located at the steering wheel. The driver typically looks in the direction of the display 120 or directly at it while driving thereby increasing the likelihood that the acoustic energy is directed towards the display 120, and thus, the at least one microphone 126 located at a left side (driver side) of the frame 118 and/or region 108.

In another example, illustrated by fig. 1 and 1c, the at least one microphone 128 located at a right side (passenger side) of the frame 118 and/or region 108 may better pick the sound from a passenger.

In some examples, it may be advantageous to place more than one microphone. For example, at least one microphone 115 or 126 may be placed on the left side (driver side) and at least one microphone 115 or 128 on the right side (passenger side) of the dashboard 102. Additionally or alternatively, it may be advantageous to place at least one microphone 114 at a central location of region 108 and/or frame 118 in traverse direction 111.

When more than one microphone is used, the signal from all microphones may be aggregated improving signal to noise ratio.

FIG. 1c schematically shows an acoustic system 100c for a vehicle cabin according to one of a number of embodiments.

The acoustic system 100c comprises at least one microphone 128 configured to pick up sound from a vehicle cabin 116.

At least one support structure 122 is configured to place the at least one microphone 128 in a position to pick up the sound.

The at least one support structure 122 is provided in a dashboard 102 of the vehicle cabin 116.

In some embodiments, the at least one microphone 128 may be mountable at the at least one support structure 122 withing a region 108 at the dashboard 102. The region 108 may extend across the dashboard 102 in a traverse direction 111 for to each side from a centre of the dashboard in the traverse direction up to a full width of the dashboard 102 measured in the traverse direction 111. The traverse direction 111 may extend through the vehicle cabin 116 from one side door to another side door of the vehicle, perpendicular to a vehicle's centreline, wherein the vehicle's centreline may extend in a longitudinal direction 110 from a vehicle's front to a vehicle's rear dividing the vehicle into two equal halves.

In some embodiments, an end point of each of the at least one microphone 128 facing an interior space of the cabin 116 may be arranged flush with an outer surface of the dashboard 102 facing the interior space of the cabin 116.

In some embodiments, the acoustic system 100b may comprise at least two microphones 128 and at least two support structures 122 arranged at a distance of at least 1.5 cm between the at least two microphones 128. The distance may be measured from the centre of each microphone and/or support structure (e.g., a hole). The at least two support structures 122 may be provided in the dashboard 102.

In some embodiments, the acoustic system 100b may comprise three or more microphones 128 mountable through three or more corresponding support structures 122. The three or more microphones 128 and the three or more corresponding support structures 122 may be arranged in a symmetrical pattern. The centre of symmetry may correspond to a location of a central microphone of the three or more microphones 128.

The symmetrical pattern may improve aesthetic aspects (appearance) of the infotainment system.

In some embodiments, a mesh grille 124 may be arranged behind each of the at least one microphone 128 to reduce visibility of each of the at least one support structures 122.

Reduced visibility of each of the at least one support structures 122 may improve aesthetic aspects (appearance) of the infotainment system.

In some embodiments, the dashboard 102 may be a part of the vehicle infotainment system 300 (as further described in the context of fig. 3).

In some embodiments, the at least one support structure 122 may be located inside the vehicle cabin 116, as further illustrated by fig. 4, at a hight below an upper end 412 of a seat backrest of the vehicle viewed from floor 416 to ceiling 418 of the vehicle in a vertical direction 404 of the vehicle that may be perpendicular to the traverse direction 111 and to the longitudinal direction 110. Additionally or alternatively, the at least one support structure 122 may be located inside the vehicle cabin 116 at a hight below an upper end 408 of a front window of the vehicle from floor 416 to ceiling 418 of the vehicle in the vertical direction 404.

In some embodiments, the at least one support structure 122 may be at least one hole.

In some examples, the at least one microphone 128 may be located on a (right) side of the frame 118 facing passenger's side door. In this example, the at least one microphone 128 may better pick up the sound from a passenger's voice since the acoustic energy from the passenger's voice is more likely to be directed in the direction to the right side of the frame 118 (opposite to the left side, as described in the context of fig. 1b).

In some examples, the at least one microphone 126 may be located on a (left) side from the display 120 facing the steering wheel, as described in the context of fig. 1b. The at least one microphone 126 can better pick up the sound from the driver's voice.

Additionally or alternatively, the at least one microphone 128 may be located on a (right) side from the display 120 facing passenger's side door, as described in the context of fig. 1c. The at least one microphone 126 can better pick up the sound from the driver's voice while the at least one microphone 128 can better pick up the sound from the from passenger's voice.

In some examples, the display 120 may extend for a part of the width of the dashboard 102 in the traverse direction 111, as illustrated in fig. 1b. The at least one microphone 115, 126 and/or 128 may be located at the right side of the display 120 (facing passenger's side door) and/or left side of the display 120 (facing the steering wheel). Additionally, or alternatively, the at least one microphone 115, 114 may be located centrally at a frame 118 in the traverse direction 111.

In some other examples, the display 120 may extend for the full width of the dashboard 102 in the traverse direction 111, as illustrated in fig. 1c. The at least one microphone 115, 126 and/or 128 may be located at the right side of the display 120 (facing passenger's side door) and/or left side of the display 120 (facing the steering wheel). Additionally, or alternatively, the at least one microphone 115, 114 may be located centrally at a frame 118 in the traverse direction 111.

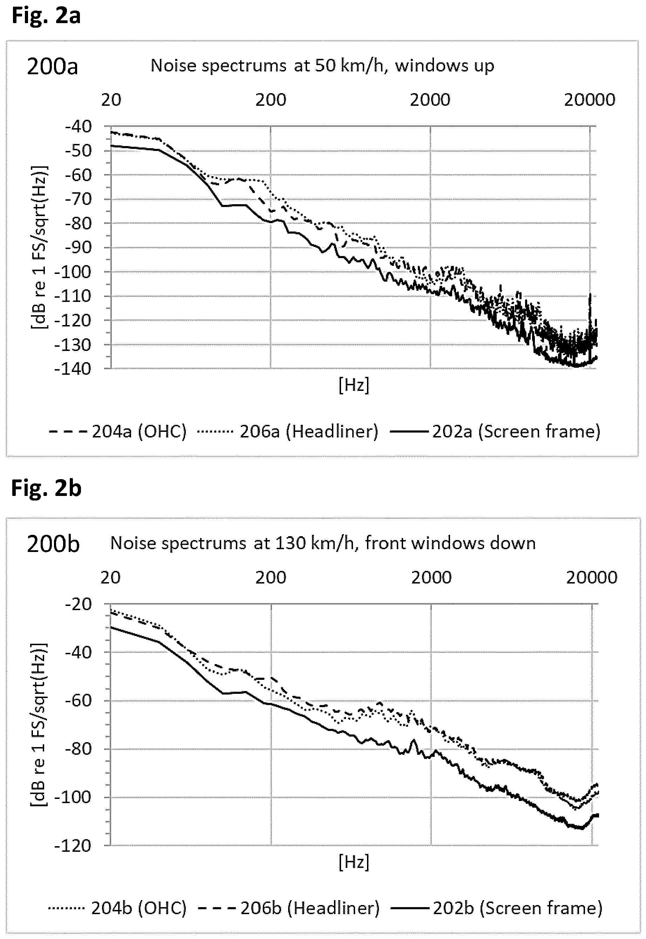

FIG. 2a shows noise spectra 200a measured at conditions A.

Conditions A comprise driving speed 50 km/h and having windows up (closed).

The noise spectra 200a comprise a noise spectrum 202a measured at a frame 118 on a dashboard 102, a noise spectrum 204a measured at an OHC 104 and a noise spectrum 206a measured at a headliner 106. The noise spectrum 202a at a frame on a dashboard has improved signal to noise ratio as compared to the noise spectrum 204a at the OHC and the noise spectrum 206a at a headliner. Thus, arranging the at least one microphone 114, 115; 126, 128 at dashboard 102 in contrast to arranging microphones at OHC 104 or headliner 106 as described in the context of figs. 1, 1a-1c is advantageous for improving signal to noise ratio.

FIG. 2b shows noise spectra 200b measured at conditions B.

Conditions B comprise driving speed 130 km/h and having windows down (open).

The noise spectra 200b comprise a noise spectrum 202b measured at a frame 118 on a dashboard 102, a noise spectrum 204b measured at an OHC 104 and a noise spectrum 206b measured at a headliner 106. The noise spectrum 202b at a frame on a dashboard shows improvements in signal to noise ratio as compared to the noise spectrum 204b at the OHC and the noise spectrum 206b at a headliner. Thus, arranging the at least one microphone 114, 115; 126, 128 at dashboard 102 in contrast to arranging microphones at OHC 104 or headliner 106 as described in the context of figs. 1, 1a-1c is advantageous for improving signal to noise ratio.

The improvement of the signal to noise ratio by locating the at least one microphone 114, 115; 126, 128 at dashboard 102 is even more prominent at Conditions B in comparison to Conditions A described in the context of fig. 2a. Thus, arranging the at least one microphone 114, 115; 126, 128 at dashboard 102 in contrast to arranging microphones at OHC 104 or headliner 106 as described in the context of figs. 1, 1a-1c may be particularly advantageous for improving signal to noise ratio at increased driving speed, and thus, for improving acoustics performance of the at least the at least one microphone 114, 115; 126, 128. In other words, locating the at least one microphone 114, 115; 126, 128 at dashboard 102 as described in the context of figs. 1, 1a-1c, can make the acoustic performance more robust to air movement in the cabin of the vehicle caused by opening the windows as well as operation of HVAC.

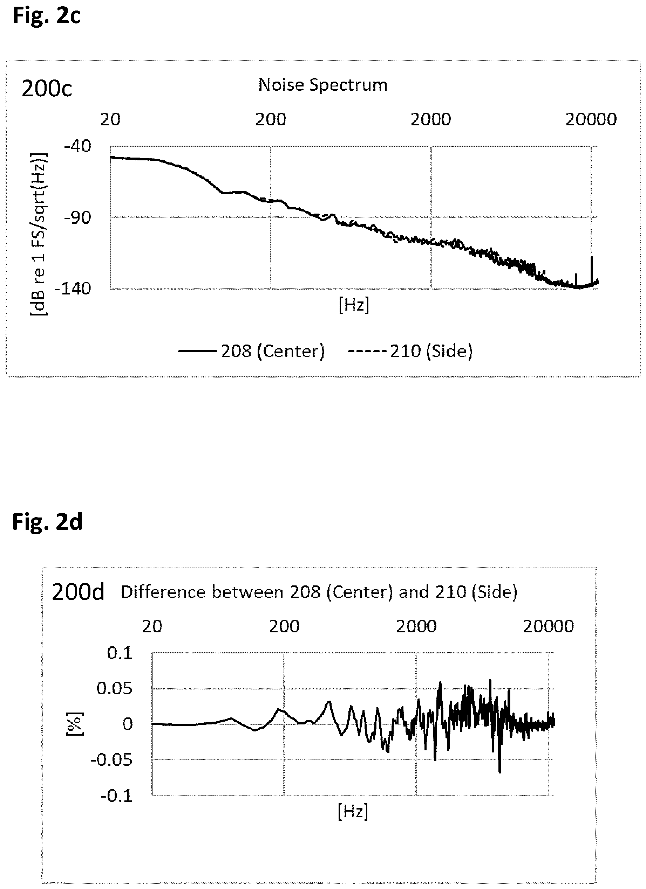

FIG. 2c shows noise spectra 200c measured at different locations on a frame.

The noise spectra 200c comprises a noise spectrum 208 measured at a central location and a noise spectrum 210 measured at a side location on the frame 118. Since the difference between noise spectrum 208 and noise spectrum 210 is small, the at least one microphone 114, 115; 126, 128 may be advantageously located at any part of the dashboard 102 withing region 108, as described in the context of figs. 1, 1a-1c and 4 thereby providing an improved acoustic performance of the vehicle infotainment system 300. An advantageous location for the at least one microphone may be a central location at a frame 118 (or display 120) in traverse direction 111. Additionally, or alternatively, an advantageous location may be at one side or each side of the frame 118 (or display 120) in traverse direction 111.

FIG. 2d shows a difference 200d between noise spectra measured at different locations at a dashboard.

The difference 200d between noise spectra measured at different locations at a dashboard was calculated as a difference between a noise spectrum 208 measured at a central location and a noise spectrum 210 measured at a side location on the frame (illustrated in fig. 2c).

Since the difference 200d is small, the at least one microphone 114, 115; 126, 128 may be advantageously located at any part of the dashboard 102 withing region 108, as described in the context of figs. 1, 1a-1c and 4 thereby providing an improved acoustic performance of the vehicle infotainment system 300. An advantageous location for the at least one microphone may be a central location at a frame 118 (or display 120) in traverse direction 111. Additionally, or alternatively, an advantageous location may be at one side or each side of the frame 118 (or display 120) in traverse direction 111.

Arranging the at least one microphone 115 or 128 of centred towards passenger's side of dashboard 102 in traverse direction 111 may provide additional advantages to better pick up the voice from a front passenger while arranging the at least one microphone 115 or 126 of centred towards driver's side of dashboard 102 in traverse direction 111 may provide additional advantages to better pick up the voice from the driver.

FIG. 3 schematically shows a vehicle infotainment system 300 for a vehicle cabin according to one of a number of embodiments.

The vehicle infotainment system 300 comprises an acoustic system (such as described in the context of figs. 1, 1a, 1b, 1c). The acoustic system comprises at least one microphone 304. Advantageous arrangements of the at least one microphone 304 (at least one microphone 114, 115, 126, 128) for vehicle infotainment system 300 are described in the context of figs. 1, 1a-1c, 2a-2d and 4.

In some embodiments, the vehicle infotainment system 300 may further comprise a speaker 306, a computing device 310 and display 302 (display 120). The speaker 306, the display 302, the at least one microphone 304 and the computing device 310 may be communicatively coupled. The computing device 310 may be configured to receive picked up sound from the at least one microphone 304, wherein the picked-up sound may be based on a voice command of the human user of the vehicle infotainment system 300 (a driver and/or a passenger). The computing device 310 may be further configured to process the picked-up sound into computer readable instructions for controlling an entertainment application 318 and/or a navigation application 320.

In some embodiments, the entertainment application 318 and/or the navigation application 320 may be a part of the vehicle infotainment system 300.

In some embodiments, the computing device 310 may be further configured to provide an output audio signal via the speaker 306 generated, for example, by the entertainment application 318 and/or the navigation application. The output audio signal may be, for example, music. Alternatively or additionally, the output audio signal may be, for example, navigation instructions provided to the human user of the vehicle (driver). In some examples, the entertainment application 318 may change the music played in response to the voice command of the human user of the vehicle (a driver or a passenger).

In some examples, the vehicle infotainment system 300 may further comprise a camera 308. The camera 308 may be used by the navigation application 320 for providing the navigation instructions.

Input/output devices 314 may integrate or communicatively couple components of the vehicle infotainment system 300 and instruments (sub-systems) of the vehicle.

Vehicle infotainment system 300 may expose a speech interface comprising an acoustic system 100, 100a, 100b, 100c that allows a human user (occupant) of a vehicle to issue voice commands to vehicle infotainment system 300. The speech interface may comprise the at least one microphone coupled to the computing device 310 of vehicle infotainment system 300. The voice commands may be picked up by the at least one microphone of the acoustic system 100, 100a, 100b, 100c and converted into computer readable instructions. The computer readable instructions may be stored on an electronic storage medium (memory).

For example, vehicle infotainment system 300 may initiate one or more vehicle operations in response to a voice command (i.e., the picked-up sound) of the human occupant (e.g., a driver, a passenger), including querying a database 322 to obtain a library of vehicle functions from the database 322, where each vehicle function, when executed, causes a subsystem within a vehicle to perform a corresponding vehicle operation (e.g., changing volume, playing music, navigation operation, assisted parking, etc.).

FIG. 4 schematically shows a projection 400 of a vehicle cabin on a vertical plane according to one of a number of embodiments.

In particular, projection 400 illustrated in fig. 4 shows a projection of a dashboard 402 in the vertical plane and a projection of a headliner 406, a front window, floor 416 and ceiling 418 of the vehicle. The vertical plane may be defined by a vertical direction 404 being perpendicular to the traverse direction 111 described in the context of figs. 1, 1a-1c.

Fig. 4 further shows an upper end 408 of a front window of the vehicle, a bottom end 410 of a front window of the vehicle, an upper end 412 of a seat backrest of the vehicle and a bottom end 414 of a seat backrest of the vehicle.

As described in the context of figs. 1b and 1c, at least one support structure 122 may be located inside the vehicle cabin 116 at a hight below an upper end 412 of a seat backrest of the vehicle viewed from floor 416 to ceiling 418 of the vehicle in a vertical direction 404 of the vehicle that is perpendicular to the traverse direction 111 and to the longitudinal direction 110. Additionally or alternatively, the at least one support structure 122 may be located inside the vehicle cabin 116 at a hight below an upper end 408 of a front window of the vehicle when viewed from floor 416 to ceiling 418 of the vehicle in the vertical direction 404.

The longitudinal direction 110 illustrated in figs. 1, 1a-1c (not shown in fig. 4) is cross perpendicular to the traverse direction 111 and to the vertical direction 404 illustrated in fig. 4.

In view of the above, general conclusions can be drawn that may be summarised by the following examples.

According to an aspect, a vehicle infotainment system is provided. The vehicle infotainment system comprises an acoustic system. The acoustic system comprises at least one microphone configured to pick up sound from a vehicle cabin. The vehicle infotainment system further comprises a display configured to display information for a human user of the vehicle infotainment system. The display comprises a frame by which the display is attached to a part of the vehicle cabin and at least one support structure configured to place the at least one microphone in a position to pick up the sound, wherein the at least one support structure is provided at the frame.

In some examples, the frame of the vehicle infotainment system may extend across a dashboard of a vehicle in a traverse direction to each side from a centre of the dashboard in the traverse direction up to a full width of the dashboard measured in the traverse direction. The traverse direction may extend through the vehicle cabin from one side door to another side door of the vehicle, perpendicular to a vehicle's centreline, wherein the vehicle's centreline may extend in a longitudinal direction from a vehicle's front to a vehicle's rear dividing the vehicle into two equal halves.

In some examples, an end point of each of the at least one microphone (of the vehicle infotainment system) facing an interior space of the cabin may be arranged flush with an outer surface of the frame facing the interior space of the cabin.

In some examples, the acoustic system may comprise at least two microphones arranged at a distance of at least 1.5 cm between the at least two microphones.

In some examples, the acoustic system may comprise three or more microphones mountable through three or more corresponding support structures, wherein the three or more microphones and the three or more corresponding support structures may be arranged in a symmetrical pattern, wherein a centre of symmetry may correspond to a location of a central microphone of the three or more microphones.

In some examples, a mesh grille may be arranged behind each of the at least one microphone to reduce visibility of each of the at least one support structure.

According to some further aspects, the vehicle infotainment system comprises an acoustic system. The acoustic system comprises at least one microphone configured to pick up sound from a vehicle cabin. The vehicle infotainment system further comprises at least one support structure configured to place the at least one microphone in a position to pick up the sound, wherein the at least one support structure is provided in a dashboard of the vehicle cabin.

In some examples, the at least one microphone of the vehicle infotainment system may be mountable at the at least one support structure withing a region at the dashboard, wherein the region may extend across the dashboard in a traverse direction to each side from a centre of the dashboard in the traverse direction up to a full width of the dashboard measured in the traverse direction. The traverse direction may extend through the vehicle cabin from one side door to another side door of the vehicle, perpendicular to a vehicle's centreline, wherein the vehicle's centreline may extend in a longitudinal direction from a vehicle's front to a vehicle's rear dividing the vehicle into two equal halves.

In some examples, an end point of each of the at least one microphone (of the vehicle infotainment system) facing an interior space of the cabin may be arranged flush with an outer surface of the dashboard facing the interior space of the cabin.

In some examples, the acoustic system may comprise at least two microphones and at least two support structures arranged at a distance of at least 1.5 cm between the at least two microphones, wherein the at least two support structures may be provided in the dashboard.

In some examples, the acoustic system may comprise three or more microphones mountable through three or more corresponding support structures, wherein the three or more microphones and the three or more corresponding support structures may be arranged in a symmetrical pattern. The centre of symmetry may correspond to a location of a central microphone of the three or more microphones.

In some examples, a mesh grille may be arranged behind each of the at least one microphone to reduce visibility of each of the at least one support structures.

The vehicle infotainment system of any of the above examples may further comprise the dashboard.

The at least one support structure of any of the above examples may be located inside the vehicle cabin at a hight below an upper end of a seat backrest of the vehicle viewed from floor to ceiling of the vehicle in a vertical direction of the vehicle that is perpendicular to the traverse direction and to the longitudinal direction. Alternatively or additionally, the at least one support structure of any of the above examples may be located inside the vehicle cabin at a hight below an upper end of a front window of the vehicle when from floor to ceiling of the vehicle in the vertical direction.

The vehicle infotainment system of any of the above examples may further comprise a speaker, and a computing device. The speaker, the display, the at least one microphone and the computing device may be communicatively coupled. The computing device may be configured to receive picked up sound from the at least one microphone. The picked-up sound may be based on a voice command of the human user of the vehicle infotainment system. The computing device may be further configured to process the picked-up sound into computer readable instructions for controlling an entertainment application and/or a navigation application. The computing device may be further configured to provide an output audio signal via the speaker generated by the entertainment application and/or the navigation application.

According to some further aspects, a vehicle infotainment system is provided. The vehicle infotainment system comprises an acoustic system. The acoustic system comprises at least one microphone configured to pick up sound from a vehicle cabin. The vehicle infotainment system comprises at least one support structure configured to place the at least one microphone of the acoustic system in a position to pick up the sound, wherein the at least one support structure is provided at the frame of a display located at a dashboard of the vehicle cabin, and/or the at least one support structure is provided in the dashboard of the vehicle cabin.

In some examples, the vehicle infotainment system may comprise the display located at the dashboard of the vehicle cabin.

In some examples, the vehicle infotainment system may comprise the frame of the display.

In some examples, the vehicle infotainment system may comprise the dashboard.

In some examples, the vehicle infotainment system may comprise the display located at the dashboard of the vehicle cabin, the frame of the display and the dashboard.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices. The methods may be performed by executing stored instructions with one or more logic devices (e.g., processors) in combination with one or more additional hardware elements, such as storage devices, memory, hardware network interfaces/antennae, switches, actuators, clock circuits, etc. The described methods and associated actions may also be performed in various orders in addition to the order described in this application, in parallel, and/or simultaneously. The described systems are exemplary in nature, and may include additional elements and/or omit elements. The subject matter of the present disclosure includes all novel and non-obvious combinations and sub-combinations of the various systems and configurations, and other features, functions, and/or properties disclosed.

As used in this application, an element or step recited in the singular and proceeded with the word "a" or "an" should be understood as not excluding plural of said elements or steps, unless such exclusion is stated (e.g., a processor does not exclude plural of processors). Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The following claims particularly point out subject matter from the above disclosure that is regarded as novel and non-obvious.

### Reference signs

100, 100a, 100b, 100c: an acoustic system;
102: a dashboard;
104: an overhead console (OHC);
106: a headliner;
108: a region on a dashboard;
110: a longitudinal direction;
111: a traverse direction;
112: a centre of a dashboard in a traverse direction;
114: a microphone(s) (at a central location at a frame on a dashboard);
115: a microphone(s) (at a side location at a frame on a dashboard);
116: a vehicle cabin;
118: a frame for a display;
120: a display;
122: at least one support structure (hole);
124: a mesh grille;
126: a microphone(s) (at a central location at a dashboard);
128: a microphone(s) (at a side location at a dashboard);
200a: noise spectra measured at conditions A (driving speed 50 km/h and having windows up);
202a: a noise spectrum at a frame on a dashboard;
204a: a noise spectrum at an OHC;
206a: a noise spectrum at a headliner;
200b: noise spectra measured at conditions B (driving speed 130 km/h and having windows down);
202b: a noise spectrum at a frame on a dashboard;
204b: a noise spectrum at an OHC;
206b: a noise spectrum at a headliner;
200c: noise spectra measured at different locations at a dashboard;
208: a noise spectrum at a central location;
210: a noise spectrum at a side location;
200d: a difference between noise spectra measured at different locations at a dashboard;
300: an infotainment system;
302: a display;
304: a microphone(s);
306: a speaker;
308: a camera;
310: a computing device;
312: a processor;
314: input/output devices;
316: a memory;
318: an entertainment application;
320: a navigation application;
322: a database;
400: a projection of a vehicle cabin on a vertical plane;
402: a projection of a dashboard;
404: a vertical direction;
406: a projection of a headliner;
408: an upper end of a front window of the vehicle;
410: a bottom end of a front window of the vehicle;
412: an upper end of a seat backrest of the vehicle;
414: a bottom end of a seat backrest of the vehicle;
416: floor of the vehicle;
418: ceiling of the vehicle.

## Claims

1. A vehicle infotainment system (300) comprising:
- an acoustic system (100, 100a), the acoustic system (100, 100a) comprising at least one microphone (114, 115) configured to pick up sound from a vehicle cabin (116),
- the vehicle infotainment system (300) further comprising:
- a display (120; 302) configured to display information for a human user of the vehicle infotainment system (300), the display (120) comprising a frame (118) by which the display is attached to a part of the vehicle cabin (116), and
- at least one support structure (122) configured to place the at least one microphone (114, 115) in a position to pick up the sound, wherein the at least one support structure (122) is provided at the frame (118).

2. The vehicle infotainment system (300) of claim 1, wherein the frame (118) extends across a dashboard (102) of a vehicle in a traverse direction (111) to each side from a centre of the dashboard in the traverse direction up to a full width of the dashboard (102) measured in the traverse direction (111),
wherein the traverse direction (111) extends through the vehicle cabin (116) from one side door to another side door of the vehicle, perpendicular to a vehicle's centreline, wherein the vehicle's centreline extends in a longitudinal direction (110) from a vehicle's front to a vehicle's rear dividing the vehicle into two equal halves.

3. The vehicle infotainment system (300) of claim 1 or 2,
wherein an end point of each of the at least one microphone (114, 115) facing an interior space of the cabin (116) is arranged flush with an outer surface of the frame (118) facing the interior space of the cabin (116).

4. The vehicle infotainment system (300) of any one of claims 1-3,
wherein the acoustic system (100, 100a) comprises at least two microphones (114, 115) arranged at a distance of at least 1.5 cm between the at least two microphones (114, 115).

5. The vehicle infotainment system (300) of any one of claims 1-4,
wherein the acoustic system (100, 100a) comprises three or more microphones (114, 115) mountable through three or more corresponding support structures (122), wherein the three or more microphones (114, 115) and the three or more corresponding support structures (122) are arranged in a symmetrical pattern, wherein a centre of symmetry corresponds to a location of a central microphone of the three or more microphones (114, 115).

6. The vehicle infotainment system (300) of any one of claims 1-5,
wherein a mesh grille (124) is arranged behind each of the at least one microphone (114, 115) to reduce visibility of each of the at least one support structure (122).

7. A vehicle infotainment system (300) comprising:
- an acoustic system (100, 100b, 100c), the acoustic system (100, 100b, 100c) comprising at least one microphone (126, 128) configured to pick up sound from a vehicle cabin (116),
- the vehicle infotainment system (300) further comprising:
- at least one support structure (122) configured to place the at least one microphone (126, 128) in a position to pick up the sound, wherein the at least one support structure (122) is provided in a dashboard (102) of the vehicle cabin (116).

8. The vehicle infotainment system (300) of claim 7,
wherein the at least one microphone (126, 128) is mountable at the at least one support structure (122) withing a region (108) at the dashboard (102), wherein the region (108) extends across the dashboard (102) in a traverse direction (111) to each side from a centre of the dashboard in the traverse direction up to a full width of the dashboard (102) measured in the traverse direction (111),
wherein the traverse direction (111) extends through the vehicle cabin (116) from one side door to another side door of the vehicle, perpendicular to a vehicle's centreline, wherein the vehicle's centreline extends in a longitudinal direction (110) from a vehicle's front to a vehicle's rear dividing the vehicle into two equal halves.

9. The vehicle infotainment system (300) of claim 7 or 8,
wherein an end point of each of the at least one microphone (126, 128) facing an interior space of the cabin (116) is arranged flush with an outer surface of the dashboard (102) facing the interior space of the cabin (116).

10. The vehicle infotainment system (300) of any one of claims 7-9,
wherein the acoustic system (100, 100b, 100c) comprises at least two microphones (126, 128) and at least two support structures (122) arranged at a distance of at least 1.5 cm between the at least two microphones (126, 128), wherein the at least two support structures (122) are provided in the dashboard (102).

11. The vehicle infotainment system (300) of any one of claims 7-10,
wherein the acoustic system (100, 100b, 100c) comprises three or more microphones (126, 128) mountable through three or more corresponding support structures (122), wherein the three or more microphones (126, 128) and the three or more corresponding support structures (122) are arranged in a symmetrical pattern, wherein the centre of symmetry corresponds to a location of a central microphone of the three or more microphones (126, 128).

12. The vehicle infotainment system (300) of any one of claims 7-11,
wherein a mesh grille (124) is arranged behind each of the at least one microphone (126, 128) to reduce visibility of each of the at least one support structures (122).

13. The vehicle infotainment system (300) of any one of claims 7-12, further comprising the dashboard (102).

14. The vehicle infotainment system (300) of any one of claims 1-13,
wherein the at least one support structure (122) is located inside the vehicle cabin (116) at a hight below an upper end (412) of a seat backrest of the vehicle viewed from floor (416) to ceiling (418) of the vehicle in a vertical direction (404) of the vehicle that is perpendicular to the traverse direction (111) and to the longitudinal direction (110), and/or
wherein the at least one support structure (122) is located inside the vehicle cabin (116) at a hight below an upper end (408) of a front window of the vehicle when from floor (416) to ceiling (418) of the vehicle in the vertical direction (404).

15. The vehicle infotainment system (300) of any one of the preceding claims further comprising:
- a speaker (306), and
- a computing device (310),
wherein the speaker (306), the display (120, 302), the at least one microphone (114, 115; 126, 128; 304) and the computing device (310) are communicatively coupled, and
wherein the computing device (310) is configured to receive picked up sound from the at least one microphone (114, 115; 126, 128; 304), wherein the picked-up sound is based on a voice command of the human user of the vehicle infotainment system (300), and
wherein the computing device (310) is further configured to process the picked-up sound into computer readable instructions for controlling an entertainment application (318) and/or a navigation application (320) and to provide an output audio signal via the speaker (306) generated by the entertainment application (318) and/or the navigation application (320).
